# EUROPÄISCHE PATENTSCHRIFT

(11) **EP 3 156 435 B1**
(45) Veröffentlichungstag und Bekanntmachung des Hinweises auf die Patenterteilung: **24.07.2019**
(21) Anmeldenummer: 15189826.9
(22) Anmeldetag: 14.10.2015
(51) Int. Cl.: C08G 69/26, C08G 69/36, C08L 77/06

(54) **COPOLYAMIDE, DIESE ENTHALTENDE FORMMASSEN UND DARAUS HERGESTELLTE FORMKÖRPER**
COPOLYAMIDES, MOULDING COMPOUNDS CONTAINING THEM AND SHAPED ARTICLES PRODUCED THEREFROM
COPOLYAMIDES, COMPOSITIONS DE MOULAGE LES CONTENANT ET MOULURES PRODUITES À PARTIR DE CEUX-CI

(43) Veröffentlichungstag der Anmeldung: 19.04.2017
(73) Patentinhaber: EMS-PATENT AG, 7013 Domat / Ems (CH)
(72) Erfinder: BAYER, Andreas, 7013 Domat/Ems (CH); HEWEL, Manfred, 70143 Domat/Ems (CH)
(74) Vertreter: Pfenning, Meinig & Partner mbB

(56) Entgegenhaltungen:
- EP-A1- 0 280 736
- WO-A1-2014/198762
- WO-A1-2014/198762
- JP-A- 2010 285 553

## Beschreibung

Die Erfindung betrifft Copolyamide, die aus einer Diaminkomponente, einer Dicarbonsäurekomponente und gegebenenfalls einer Lactam- und/oder ω-Aminosäurekomponente gebildet sind. Weiterhin betrifft die Erfindung eine Polyamidformmasse, die mindestens eines dieser Copolyamide enthält. Aus diesen Formmassen hergestellte Formkörper finden Verwendung im Automobilbereich, im Haushaltsbereich, in der Mess-, Regelungs- und Steuertechnik oder im Maschinenbau.

Thermoplastische teilaromatische teilkristalline Polyamide stellen eine Gruppe der Polyamide dar, die sich durch ihre hohe Temperaturbeständigkeit auszeichnen. Diese Polyamide lassen sich hervorragend bei Hochtemperaturanwendungen in verschiedenen Bereichen einsetzen. Dabei kommt es insbesondere auf eine hohe Festigkeit bei erhöhten Temperaturen an.

Aus der WO 2014/198762 sind teilaromatische Polyamide bekannt, die aus Terephthalsäure, gegebenenfalls Isophthalsäure als Disäure und Hexamethylendiamin und einem weiteren zyklischen Diamin als Komponente gebildet sind.

Die WO 2008/155271 beschreibt ein Herstellungsverfahren für Polyamide, bei dem ein Dicarbonsäuregemisch aus Terephthalsäure und Isophthalsäure eingesetzt wird, wobei ein Teil des Dicarbonsäuregemisches durch andere Dicarbonsäuren ersetzt sein kann. Als Diaminkomponente wird Hexamethylendiamin eingesetzt, das zu gewissen Anteilen durch andere Diamine ersetzt sein kann. Ausgehend von diesem Stand der Technik besteht ein weiterer Bedarf nach teilaromatischen Polyamiden mit verbessertem Eigenschaftsprofil bezüglich ihrer Verarbeitbarkeit sowie der mechanischen Eigenschaften bei hohen Temperaturen.

Die EP 0 280 736 A1 betrifft aromatische Polyamide, die als Komponenten mit guten Gasbarriereeigenschaften eingesetzt werden. Verwendung finden diese insbesondere für die Herstellung von Containern.

Die JP 2010 285553 A betrifft Polyamidzusammensetzungen mit einer hohen Wärmebeständigkeit und Transparenz, Diese Polyamidzusammensetzungen werden als Verpackungsmaterial, für Automobilbauteile und elektronische Bauteile verwendet.

Es ist daher Aufgabe der vorliegenden Erfindung, teilaromatische Copolyamide mit verbesserten Eigenschaften insbesondere für Hochtemperaturanwendungen bereitzustellen.

Diese Aufgabe wird durch die Copolyamide mit den Merkmalen des Anspruchs 1, die Polyamidformmasse mit dem Merkmal des Anspruchs 13 und die Formkörper mit den Merkmalen des Anspruchs 15 gelöst. Die weiteren abhängigen Ansprüche zeigen vorteilhafte Weiterbildungen auf.

Erfindungsgemäß werden Copolyamide bereitgestellt, die aus einer Diaminkomponente A), einer Dicarbonsäurekomponente B) und gegebenenfalls einer Lactam-/oder ω-Aminosäurekomponente C) gebildet sind. Hierbei wird ein maximaler Überschuss der Diaminkomponente A) oder der Dicarbonsäurekomponente B) von 3 % eingesetzt. Die Menge der Lactam- und/oder ω-Aminosäurekomponente C) liegt im Bereich von 0 - 15 Mol-%. Die Summe der Komponenten A) bis C) beträgt dabei 100 Mol-%.

Die Diaminkomponente A) ist dabei ausgewählt aus
A1) 62 bis 96 Mol-Anteilen 1,6-Hexandiamin,
A2) 4 bis 38 Mol-Anteilen Bis(aminomethyl)-cyclohexan sowie
A3) 0 bis 30 Mol-Anteilen eines oder mehrerer von A2) verschiedener cycloaliphatischer Diamine besteht,
wobei die Summe von A2) und A3) 4 bis 38 Mol-Anteile und die Summe von A1), A2) und A3) 100 Mol-Anteile beträgt.

Die Dicarbonsäurekomponente B) ist ausgewählt aus
B1) 64 bis 100 Mol-Anteilen Terephthalsäure,
B2) 0 bis 18 Mol-Anteilen Isophthalsäure sowie
B3) 0 bis 18 Mol-Anteilen einer oder mehrerer aliphatischer Dicarbonsäuren mit 6 bis 18 C-Atomen besteht,
wobei die Summe von B1), B2) und B3) 100 Mol-Anteile beträgt.

Die Lactam- und/oder ω-Aminosäurekomponente C) ist ausgewählt aus einem oder mehreren Lactamen und/oder ω-Aminosäuren, wobei die Summe der Lactame und/oder ω-Aminosäuren 100 Mol-Anteile beträgt.

Enthalten die erfindungsgemässen Copolyamide nur Dicarbonsäuren und Diamine so ergänzen sich deren molare Mengen auf 50 Mol-% für die Summe aller Diamine und 50 Mol-% für die Summe aller Dicarbonsäuren und die Summe der Diamin- und Dicarbonsäure-Mengen ergibt 100 Mol-% für das Copolyamid.

Enthalten die erfindungsgemässen Copolyamide neben Dicarbonsäuren und Diaminen auch Lactame oder ω-Aminosäuren zu X Mol-%, so beträgt die Summe aller Diamine nur noch (50 - 0,5 X) Mol-% und die Summe aller Dicarbonsäuren (50 - 0,5 X) Mol-%, bezogen auf 100 Mol-% Copolyamid.

Bei den Mengenangaben zu den Dicarbonsäuren und Diaminen der Copolyamide gilt, dass die Summe der molaren Mengen aller Diamine im Wesentlichen gleich der Summe der molaren Mengen aller Dicarbonsäuren ist. Im Wesentlichen gleich bedeutet dabei einen maximalen Überschuss der Dicarbonsäuren oder der Diamine von 3 %, d.h. das molare Verhältnis von Dicarbonsäuren zu Diaminen beträgt 1,03 : 1 bis 1 : 1,03. Bevorzugt ist ein maximalen Überschuss der Dicarbonsäuren oder der Diamine von 2 %, d.h. das molare Verhältnis von Dicarbonsäuren zu Diaminen beträgt 1,02 : 1 bis 1 : 1,02.

Die Mengenangaben bezüglich der Monomere sind dabei so zu verstehen, dass sich ein entsprechendes Molverhältnis dieser bei der Polykondensation eingesetzten Monomere auch in den derart durch Polykondensation hergestellten Copolyamiden wiederfindet.

Die Schreibweisen und Abkürzungen für Polyamide und deren Monomere sind in der ISO-Norm 1874-1:2010 festgelegt. In dieser Anmeldung kommen folgende Abkürzungen für Monomere vor BAC für Bis(aminomethyl)-cyclohexan, 1,3-BAC für 1,3-Bis(aminomethyl)-cyclohexan, T für Terephthalsäure, I für Isophthalsäure und 6 für 1,6-Hexandiamin.

Eine bevorzugte Ausführungsform sieht vor, dass die Diaminkomponete A) aus
A1) 65 bis 90 Mol-Anteilen 1,6-Hexandiamin,
A2) 10 bis 25 Mol-Anteilen Bis(aminomethyl)-cyclohexan sowie
A3) 0 bis 25 Mol-Anteilen eines oder mehrerer von A2) verschiedener cycloaliphatischer Diamine
ausgewählt sind, wobei die Summe von A2) und A3) 10 bis 35 Mol-Anteile und die Summe von A1), A2) und A3) 100 Mol-Anteile beträgt.

Weiter ist bevorzugt, dass die Diaminkomponete A) aus
A1) 70 bis 82 Mol-Anteilen 1,6-Hexandiamin,
A2) 18 bis 30 Mol-Anteilen Bis(aminomethyl)-cyclohexan sowie
A3) 0 bis 12 Mol-Anteilen eines oder mehrerer von A2) verschiedener cycloaliphatischer Diamine
ausgewählt sind, wobei die Summe von A2) und A3) 18 bis 30 Mol- Anteile und die Summe von A1), A2) und A3) 100 Mol-Anteile beträgt.

Vorzugsweise ist die Dicarbonsäurekomponente B) aus
B1) 70 bis 100 Mol-Anteilen Terephthalsäure,
B2) 0 bis 15 Mol-Anteilen Isophthalsäure sowie
B3) 0 bis 15 Mol-Anteilen einer oder mehrerer aliphatischer Dicarbonsäuren mit 6 bis 18 C-Atomen
ausgewählt und die Summe von B1), B2) und B3) beträgt 100 Mol-Anteile.

In einer bevorzugten Ausführungsform beträgt die Menge der Komponente C) 0 bis 10 Mol-%, besonders bevorzugt 0 bis 5 Mol-%.

Bevorzugt ist die Komponente C) ausgewählt aus der Gruppe der Lactame bzw. ω-Aminosäuren mit 4, 6, 7, 8, 11, 12 C-Atomen bestehend aus Pyrrolidin-2-on (4 C-Atome), Caprolactam (6 C-Atome), Önanthlactam (7 C-Atome), Capryllactam (8 C-Atome), Laurinlactam (12 C-Atome), 4-Aminobutansäure, 6-Aminohexansäure, 7-Aminoheptansäure, 8-Aminooctansäure, 11-Aminoundecansäure, 12-Aminododecansäure und deren Mischungen.

Besonders bevorzugt ist die Komponente C) ausgewählt aus der Gruppe der Lactame bzw. ω-Aminosäuren bestehend aus Caprolactam (6 C-Atome), Laurinlactam (12 C-Atome), 6-Aminohexansäure und 12-Aminododecansäure.

Bevorzugt ist die Komponente A3) ausgewählt aus der Gruppe der cycloaliphatischen Diamine bestehend aus Bis(4-amino-3-methyl-cyclohexyl)-methan, Bis(4-amino-cyclohexyl)methan, Bis(4-amino-3-ethyl-cyclohexyl)-methan, Bis(4-amino-3,5-dimethyl-cyclohexyl)methan, Bis(4-amino-3-methylcyclohexyl)propan, Bis(4-amino-cyclohexyl)propan, Isophorondiamin und Mischungen davon.

Besonders bevorzugt wird als Komponente A3) Bis(4-amino-3-methylcyclohexyl)methan verwendet.

Bevorzugt ist die Komponente B3) ausgewählt aus der Gruppe der aliphatischen Dicarbonsäuren mit 6 bis 18 C-Atomen bestehend aus 1,6-Hexandisäure, 1,9-Nonandisäure, 1,10-Decandisäure, 1,12-Dodecandisäure, 1,13-Tridecandisäure, 1,14-Tetradecandisäure, 1,15-Pentadecansäure, 1,16-Hexadecandisäure, 1,18-Octadecandisäure und Mischungen davon.

Besonders bevorzugt wird als Komponente B3) 1,6-Hexandisäure verwendet.

Es ist bevorzugt, dass die Summe der Mol-Anteile von A2) Bis(aminomethyl)-cyclohexan, A3) von A2) verschiedenem cycloaliphatischen Diamin, B2) Isophthalsäure und B3) aliphatischer Dicarbonsäure maximal 38 Mol-Anteile, bevorzugt maximal 35 Mol-Anteile, besonders bevorzugt maximal 30 Mol-Anteile beträgt.

Eine weitere bevorzugte Ausführungsform sieht vor, dass die erfindungsgemässen Copolyamide eine Glasübergangstemperatur von mindestens 140 °C, bevorzugt von mindestens 145 °C, besonders bevorzugt von mindestens 150 °C aufweisen.

Die mechanischen Eigenschaften von Polyamiden sind temperaturabhängig. So nimmt der Zug-E-Modul bei Temperaturen oberhalb der Glasübergangstemperatur eines Polyamids ab. Dieser Effekt beginnt sich kurz unterhalb der Glasübergangstemperatur zu zeigen. Bei einer höheren Glasübergangstemperatur bleiben die mechanischen Eigenschaften von Polyamiden somit länger unverändert.

Vorzugsweise weisen die erfindungsgemässen Copolyamide eine Schmelztemperatur von höchstens 350 °C, bevorzugt von höchstens 345 °C, besonders bevorzugt von 300 bis 340 °C auf.

Eine zu hohe Schmelztemperatur erschwert die Verarbeitung von Polyamiden, unter anderem durch ein enges Verarbeitungsfenster, da die Verarbeitungstemperatur wegen der Zersetzung des Polymers nach oben limitiert ist.

Es ist bevorzugt, dass die erfindungsgemässen Copolyamide eine als Differenz aus Schmelzwärme und Kristallisationswärme bestimmte Kristallisationsfähigkeit von mindestens 15 J/g, bevorzugt mindestens von 20 J/g und besonders bevorzugt von mindestens 25 J/g aufweisen. Die Schmelz- und Kristallisationswärme wird dabei mittels DSC-Messung nach ISO 11357 bestimmt, wobei die Messwerte der 3. Aufheizung verwendet werden.

Die Kristallisationsfähigkeit eines Polyamids muss genügend hoch sein, um eine praktikable Verarbeitungsgeschwindigkeit und ausreichende Kristallinität im Fertigteil, z.B. im Spritzguss oder bei der Extrusion zu ermöglichen. Liegt die Kristallisationsfähigkeit zu tief, werden die typischen Hochtemperatureigenschaften wie hohe Wärmeformbeständigkeit nicht erreicht. Bei 11 bis 15 J/g ist die Verwendbarkeit als Hochtemperaturpolymer stark beeinträchtigt, liegt sie unter 10 J/g ist sie nicht mehr gegeben.

Vorzugsweise weisen die erfindungsgemässen Copolyamide eine relative Viskosität, gemessen bei 20°C und einer Konzentration von 0,5 g/dl in m-Kresol, von 1,45 bis 1,95, bevorzugt 1,50 bis 1,75, besonders bevorzugt 1,55 bis 1,68 auf.

Die Einstellung der relativen Viskosität und damit der Molmasse kann in an sich bekannter Weise, z.B. über monofunktionelle Amine oder Carbonsäuren, und/oder difunktionelle Diamine oder Dicarbonsäuren als Kettenregler erfolgen. Bevorzugte monofunktionelle Kettenregler für die erfindungsgemässen Copolyamide sind Benzoesäure, Essigsäure, Propionsäure, Buttersäure, Valeriansäure, Capronsäure, Laurinsäure, Stearinsäure, 2-Ethylhexansäure, Cyclohexansäure, Propylamin, Butylamin, Pentylamin, Hexylamin, 2-Ethylhexylamin, n-Octylamin, n-Nonylamin, n-Dodecylamin, n-Tetradecylamin, n-Hexadecylamin, Stearylamin, Cyclohexylamin, 3-(Cyclohexylamino)-propylamin, Methylcyclohexylamin, Dimethylcyclohexylamin, Benzylamin, 2-Phenylethylamin, Anilin oder Triacetondiamin. Die Kettenregler können einzeln oder in Kombination benutzt werden. Es können auch andere monofunktionelle Verbindungen als Kettenregler eingesetzt werden, die mit einer Amino- oder Säuregruppe reagieren können wie Anhydride, Isocyanate, Säurehalogenide oder Ester. Die übliche Einsatzmenge der monofunktionellen Kettenregler liegt zwischen 10 und 200 mmol pro kg Copolyamid.

Es ist bevorzugt, dass die erfindungsgemässen Copolyamide einen Elastizitätsmodul zwischen 2400 und 4200 MPa, bevorzugt 2500 bis 4000 MPa, besonders bevorzugt 2600 bis 3900 MPa aufweisen.

In einer bevorzugten Ausführungsform enthalten die erfindungsgemässen Copolyamide keine Lactame und/oder ω-Aminosäuren.

In einer weiteren bevorzugten Ausführungsform enthalten die erfindungsgemässen Copolyamide keine Isophthalsäure.

In einer weiteren bevorzugten Ausführungsform sind die erfindungsgemässen Copolyamide gebildet aus den Monomeren 1,6-Hexandiamin A1), Bis(aminomethyl)-cyclohexan A2), Terephthalsäure B1) und aliphatischen Dicarbonsäuren mit 6 bis 18 C-Atomen B3).

In einer weiteren bevorzugten Ausführungsform enthalten die erfindungsgemässen Copolyamide keine aliphatischen Dicarbonsäuren.

In einer weiteren bevorzugten Ausführungsform sind die erfindungsgemässen Copolyamide gebildet aus den Monomeren 1,6-Hexandiamin A1), Bis(aminomethyl)-cyclohexan A2), von A2 verschiedenen cycloaliphatischen Diaminen A3) und Terephthalsäure B1).

In einer weiteren bevorzugten Ausführungsform enthalten die erfindungsgemässen Copolyamide ausser Bis(aminomethyl)-cyclohexan keine cycloaliphatischen Diamine.

In einer ganz besonders bevorzugten Ausführungsform sind die erfindungsgemässen Copolyamide gebildet aus den Monomeren 1,6-Hexandiamin A1), Bis(aminomethyl)-cyclohexan A2) und Terephthalsäure B1).

Das Bis(aminomethyl)-cyclohexan A2) wird ausgewählt aus der Gruppe bestehend aus 1,3-Bis(aminomethyl)-cyclohexan, 1,4-Bis(aminomethyl)-cyclohexan und Mischungen davon. Bevorzugt wird 1,3-Bis(aminomethyl)-cyclohexan verwendet.

Erfindungsgemäß werden ebenso Polyamidformmassen bereitgestellt, die mindestens eines der zuvor beschriebenen Copolyamide enthalten.

Vorzugsweise besteht die erfindungsgemässen Polyamidformmasse aus
I) 15 bis 99,95 Gew.-% einem oder mehreren Copolyamiden nach einem der Ansprüche 1 bis 12,
II) 0,05 bis 25 Gew.-% Zusatzstoffen,
III) 0 bis 70 Gew.-% Verstärkungs- und/oder Füllstoffen,
IV) 0 bis 45 Gew.-% weiteren Polymeren, verschieden von der Komponente I),
wobei sich die Komponenten I) bis IV) zu 100 Gew.-% addieren.

Die Zusatzstoffe (Komponente II) sind vorzugsweise ausgewählt aus der Gruppe bestehend aus anorganischen Stabilisatoren, organischen Stabilisatoren, insbesondere Antioxidantien, Antiozonantien, Lichtschutzmitteln, UV-Stabilisatoren, UV-Absorbern oder UV-Blockern, IR-Absorbern, NIR-Absorbern, Antiblockmitteln, Nukleierungsmitteln, Kristallisationsbeschleunigern, Kristallisationsverzögerern, Kondensationskatalysatoren, Kettenreglern, Entschäumern, kettenverlängernden Additiven, Leitfähigkeitsadditiven, Trennmitteln, Gleitmitteln, Farbstoffen, Markierungsmitteln, anorganischen Pigmenten, organischen Pigmenten, Ruß, Graphit, Kohlenstoffnanoröhrchen, Graphen, Titandioxid, Zinksulfid, Zinkoxid, Bariumsulfat, photochromen Agenzien, Antistatika, Entformungsmitteln, optischen Aufhellern, halogenfreien Flammschutzmitteln, metallischen Pigmenten, Metallflittern, metallbeschichteten Partikeln und deren Mischungen.

Die Zusatzstoffe können auch in Masterbatchform zugegeben werden. Bevorzugt wird als Basispolymer des Masterbatches ein Polyamid verwendet. Dieses Polyamid ist vorzugsweise ausgewählt aus der Gruppe bestehend aus den PA 6, PA 66, PA 12, PA 1012, PA 1212, PA 6/12, PA 6/66, PA 6/69 und deren Mischungen oder besteht aus dem Copolyamid gemäss Ansprüchen 1-12 selbst.

Die Verstärkungs- und Füllstoffe (Komponente III) sind vorzugsweise ausgewählt aus der Gruppe bestehend aus Glasfasern, Kohlenstofffasern, Metallfasern, Whiskers, Mineralfasern, synthetischen Schichtsilikaten, natürlichen Schichtsilikaten und Mischungen hiervon.

Bei den Glas- oder Kohlenstoffasern können Kurzfasern, Langfasern oder Endlosfasern (Roving) verwendet werden.

Die Glas- oder Kohlenstofffasern weisen einen Querschnitt auf, der rund, oval, elliptisch, eckig oder rechteckig ist. Es können auch Fasern mit nichtkreisförmigen Querschnitt ("flache Fasern"), insbesondere ovale, elliptische, eckige oder rechteckige eingesetzt werden. Unter den flachen Fasern sind flache Glasfasern besonders bevorzugt.

Das Erscheinungsbild der Glasfasern kann gestreckt oder spiralförmig sein.

Es können Glasfasern aus allen Glassorten, wie z.B. A-, C-, D-, E-, M-, S-, R-Glas, oder beliebigen Mischungen davon eingesetzt werden. Bevorzugt sind Glasfasern aus E-Glas oder Glasfasern aus Mischungen mit E-Glas oder Mischungen mit E-Glasfasern.

Die Kurzglasfasern besitzen vorzugsweise eine Faserlänge von 1 bis 25 mm, bevorzugt 1.5 bis 20 mm, besonders bevorzugt 2 bis 12 mm und ganz besonders bevorzugt von 2 bis 8 mm.

Die Glasfasern weisen vorzugsweise einen Durchmesser von 5 bis 20 µm, bevorzugt von 5 bis 15 µm und besonders bevorzugt von 6 bis 12 µm auf.

Werden die Glasfasern als Endlosfasern (Roving) beim Pulltrusionsverfahren eingesetzt, weisen sie vorzugsweise einen Durchmesser von maximal 20 µm, bevorzugt von maximal 18 µm, besonders bevorzugt von 5 bis 14 µm auf.

Die Kohlenstofffasern weisen vorzugsweise einen Durchmesser von 3 bis 12 µm, bevorzugt 4 bis 10 µm, besonders bevorzugt 4 bis 9 µm auf.

Als teilchenförmige Füllstoffe kommen alle dem Fachmann bekannten Füllstoffe in Frage. Hierzu zählen insbesondere partikuläre Füllstoffe ausgewählt aus der Gruppe bestehend aus Mineralen, Talk, Glimmer, Dolomit, Silikaten, Quarz, Titandioxid, Wollastonit, Kaolin, Kieselsäuren, Magnesiumcarbonat, Magnesiumhydroxid, Kreide, gemahlenem Glas, Glasflakes, gemahlenen Kohlenstofffasern, gemahlenen Mineralfasern, gemahlenen Glasfasern, gemahlenem oder gefälltem Calciumcarbonat, Kalk, Feldspat, Bariumsulfat, permanentmagnetischen oder magnetisierbaren Metallen oder Legierungen, Glaskugeln, Hohlglaskugeln, hohlkugeligen Silikatfüllstoffen und Mischungen hiervon.

Die Verstärkungs- oder Füllstoffe können oberflächenbehandelt sein, d.h. sie können mit einem geeigneten Schlichte- oder Haftvermittlersystem ausgerüstet sein. Dazu können zum Beispiel Systeme auf Basis von Fettsäuren, Wachsen, Silanen, Titanaten, Polyamiden, Urethanen, Polyhydroxyether, Epoxiden, Nickel respektive Kombinationen oder Mischungen davon verwendet werden. Bevorzugt sind sowohl die Verstärkungsstoffe als auch die Füllstoffe oberflächenbehandelt.

Die weiteren Polymere (Komponente IV) sind vorzugsweise ausgewählt aus der Gruppe bestehend aus Polyamiden, verschieden von Komponente I), Polytretrafluorethylen, Polyphenylensulfiden, Polyphenylenethern und Schlagzähmodifikatoren.

Die Schlagzähmodifikatoren sind vorzugsweise ausgewählt aus der Gruppe bestehend aus Polyethylen, Polypropylen, Polyolefin-Copolymeren, Acrylat-Copolymeren, Acrylsäure-Copolymeren, Vinylacetat-Copolymeren, Styrol-Copolymeren, Styrol-Blockcopolymeren, ionischen Ethylen-Copolymeren in denen die Säuregruppen teilweise mit Metallionen neutralisiert sind, Kern-Mantel-Schlagzähmodifikatoren und Mischungen davon.

Die Schlagzähmodifikatoren sind vorzugsweise funktionalisiert mit ungesättigten Carbonsäuren, ungesättigten Carbonsäurederivaten und/oder ungesättigten Glycidylverbindungen und zwar durch Copolymerisation und/oder Pfropfen.

Die Bedingungen, unter denen die Copolymerisation oder Pfropfung abläuft, sind dem Fachmann hinlänglich bekannt.

Die Schlagzähmodifikatoren können auch in Form einer Mischung oder eines Blends von unfunktionalisierten und/oder funktionalisierten Schlagzähmodifikatoren eingesetzt werden.

Die Polyolefin-Copolymeren sind bevorzugt ausgewählt aus der Gruppe bestehend aus Ethylen-α-Olefin-Copolymeren, Propylen-α-Olefin-Copolymeren, Ethylen-Propylen-Copolymeren, Ethylen-Propylen-Dien-Copolymeren und deren Mischungen, wobei die α-Olefine bevorzugt 3 bis 18 Kohlenstoffatome besitzen. Besonders bevorzugt sind die α-Olefine ausgewählt aus der Gruppe bestehen aus Propen, 1-Buten, 1-Penten, 1-Hexen, 1-Octen, 1-Decen 1-Dodecen und Mischungen davon.

Erfindungsgemäß werden auch Formkörper bereitgestellt, die aus den zuvor beschriebenen Formmassen bzw. Copolyamiden herstellbar sind. Diese Formkörper liegen vorzugsweise in Form eines Bauteils vor, das zum Beispiel im Automobil, insbesondere im Motorraum, im Sanitärbereich, insbesondere für Heisswasseranwendungen, im Haushaltsbereich, insbesondere für Kaffeemaschinen, Wasserkocher, Tauchsieder, Geschirrspülmaschinen, Waschmaschinen, in der Mess-, Regelungs- und Steuertechnik, insbesondere für Aktuatoren, Sensoren, Getriebe, Druckluftsteuerungen, Ventile, sowohl für Hydraulik als auch Pneumatik oder im Maschinenbau einsetzbar ist.

Die Herstellung der Copolyamide und der Formmassen kann gemäß den folgenden Verfahren erfolgen.

### Herstellung der erfindungsgemässen Copolyamide

In einem Autoklaven wird deionisiertes Wasser vorgelegt und die Monomere und etwaige Zusatzstoffe, wie Kettentregler, Entschäumer, Kondensationskatalysatoren oder Hitzestabilisatoren zugegeben. Danach wird mehrfach mit Stickstoff inertisiert. Unter Rühren wird auf die Reaktionstemperatur von 250 bis 280 °C aufgeheizt. Dies erfolgt bei einem Druck von maximal 40 bar. Der Ansatz wird in der Druckphase für 0,5 bis 4 Stunden auf der Reaktionstemperatur gehalten und anschliessend mit Dampf über eine Düse ausgetragen. Das Vorkondensat wird 12 bis 36 Stunden bei 100 bis 120 °C und einem Vakuum von 10 bis 50 mbar getrocknet.

Das Vorkondensat wird in einem zweiwelligen Extruder nachkondensiert. Dazu werden in den ersten 3 bis 4 Zonen Zylindertemperaturen von 10 bis 170 °C eingestellt, in den restlichen Zonen werden Zylindertemperaturen von 300 bis 380 °C in einem aufsteigenden und wieder absteigenden Temperaturprofil verwendet. Die Schmelze wird 2 bis 3 Zonen vor der Düse durch einen Stickstoffstrom entgast. Die Schneckendrehzahl wird auf 130 bis 300 U/min eingestellt. Das Polyamid wird als Strang durch eine Düse ausgetragen, und zwar bei einer Düsentemperatur, die auf 310 bis 370 °C eingestellt ist. Der Strang wird in einem Wasserbad bei 10 bis 80 °C abgekühlt und anschliessend granuliert. Das Granulat wird 12 bis 36 Stunden bei 100 bis 120 °C und einem Vakuum von 10 bis 50 mbar oder unter Stickstoff auf einen Wassergehalt von unter 0,1 Gew.-% getrocknet.

Geeignete Katalysatoren zur Beschleunigung der Polykondensationsreaktion sind phosphorhaltige Säuren wie beispielsweise H₃PO₂, H₃PO₃, H₃PO₄, deren Salze oder organischen Derivate. Die Katalysatoren werden im Bereich von 0,01 bis 0,5 Gew.-%, bevorzugt 0,03 bis 0,1 Gew.-%, bezogen auf das Polyamid, zugegeben.

Geeignete Entschäumer zur Vermeidung der Schaumbildung während der Entgasung sind wässrige, 10 %-ige Emulsionen, die Silicone oder Siliconderivate enthalten und in Mengen von 0,01 bis 1,0 Gew.-%, bevorzugt 0,01 bis 0,10 Gew.-%, bezogen auf das Polyamid, eingesetzt werden.

### Herstellung der erfindungsgemässen Polyamidformmasse

Die erfindungsgemässen Copolyamide können bereits während der Polykondensation mit Zusatzsstoffen ausgerüstet werden, wobei es sich bei den Zusatzsstoffen dann meist um Stoffe handelt, die ihre Wirkung während der Polykondensation entfalten sollen, wie Kettentregler, Entschäumer, Kondensationskatalysatoren oder Hitzestabilisatoren.

Die erfindungsgemässen Copolyamide können auch durch Compoundierung mit Zusatzstoffen, Verstärkungsstoffen, Füllstoffen und/oder weiteren Polymeren ausgerüstet werden. Dazu werden das getrocknete Copolyamidgranulat I), die Zusatzstoffe II) und gegebenenfalls Verstärkungs- und/oder Füllstoffe III) und/oder weitere Polymere IV) auf üblichen Compoundiermaschinen, wie z.B. ein- oder zweiwelligen Extrudern oder Schneckenknetern, in der Polymerschmelze gemischt (compoundiert). Die Komponenten werden dabei einzeln dosiert und zwar in den Einzug oder in einen Sidefeeder. Die Komponenten I), II) und gegebenenfalls die Komponente IV) können auch in Form eines Dryblends zugeführt werden. In der Regel werden die Verstärkungsstoffe bzw. die Füllstoffe einzeln über gravimetrische Dosierwaagen oder Sidefeeder in die Schmelze dosiert.

Zur Dryblend-Herstellung wird das getrocknete Copolyamidgranulat I), die Zusatzstoffe II) und gegebenenfalls weitere Polymere IV) in einem geschlossenen Behälter vermischt. Diese Mischung wird mittels eines Taumelmischers, Rhönradmischers oder Taumeltrockners 10 - 40 Minuten lang homogenisiert. Zur Vermeidung der Feuchtigkeitsaufnahme kann dies unter getrocknetem Schutzgas erfolgen.

Die Compoundierung erfolgt bei eingestellten Zylindertemperaturen von 70 bis 100 °C für das erste Gehäuse und 300 °C bis 380 °C für die restlichen Gehäuse. Vor der Düse kann Vakuum angelegt, atmosphärisch oder unter Stickstoff entgast werden. Die Schneckendrehzahl wird auf 130 bis 300 U/min eingestellt. Die Schmelze wird in Strangform ausgetragen, im Wasserbad bei 10 bis 80 °C abgekühlt und anschließend granuliert. Das Granulat wird 12 bis 36 Stunden bei 100 bis 120 °C und einem Vakuum von 10 bis 50 mbar oder unter Stickstoff auf einen Wassergehalt von unter 0,1 Gew.-% getrocknet.

Im Rahmen dieser Anmeldung wurden folgende Messmethoden verwendet:

### Relative Viskosität

ISO 307
Granulat
0,5 g in 100 ml m-Kresol
Temperatur 20 °C
Berechnung der relativen Viskosität (RV) nach RV = t/t₀ in Anlehnung an Abschnitt 11 der Norm.

### Glasübergangstemperatur (Tg), Kristallisationswärme, Schmelzwärme und Schmelzpunkt:

ISO 11357
Granulat
Die Differential Scanning Calorimetry (DSC) wurde bei jeder der drei Aufheizungen mit einer Aufheizrate von 20 K/min durchgeführt. Nach der ersten Aufheizung wird mit 20 K/min abgekühlt. Nach der zweiten Aufheizung wird die Probe in Trockeneis abgeschreckt. Glasübergangstemperatur (Tg), Kristallisationswärme, Schmelzwärme und Schmelzpunkt werden bei der dritten Aufheizung bestimmt.

Beim Schmelzpunkt wird die Temperatur am Peakmaximum angegeben. Der Mittelpunkt des Glasübergangsbereichs, welcher als Glasübergangstemperatur (Tg) angegeben wird, wurde nach der Methode "Half height" ermittelt.

### Zug-E-Modul:

ISO 527 mit einer Zuggeschwindigkeit von 1 mm/min
ISO-Zugstab, Norm: ISO/CD 3167, Typ A1, 170 x 20/10 x 4 mm, Temperatur 23 °C

### Reissfestigkeit und Reissdehnung:

ISO 527 mit einer Zuggeschwindigkeit von 50 mm/min bei unverstärkten und 5 mm/min bei verstärkten Materialien
ISO-Zugstab, Norm: ISO/CD 3167, Typ A1, 170 x 20/10 x 4 mm, Temperatur 23 °C

### Schlagzähigkeit nach Charpy:

ISO 179/*eU
ISO-Prüfstab, Norm: ISO/CD 3167, Typ B1, 80 x 10 x 4 mm, Temperatur 23 °C
* 1 = nicht instrumentiert, 2 = instrumentiert

### Kerbschlagzähigkeit nach Charpy:

ISO 179/*eA
ISO-Prüfstab, Norm: ISO/CD 3167, Typ B1, 80 x 10 x 4 mm, Temperatur 23 °C
* 1 = nicht instrumentiert, 2 = instrumentiert

Anhand der nachfolgenden Beispiele soll der erfindungsgemäße Gegenstand näher erläutert werden, ohne diesen auf die hier dargestellten spezifischen Ausführungsformen einschränken zu wollen.

Die Copolyamide der Beispiele 1 bis 15 der Tabellen 2, 3 und 4 und der Vergleichsbeispiele 16 bis 26 und 29 bis 31 der Tabellen 5, 6 und 8 enthalten 0,13 Gew.-% Phosphinsäure (CAS-Nr. 6303-21-5, Hersteller Honeywell Specialty Chemicals, Deutschland) als Kondensationskatalysator und 0,04 Gew.-% Antifoam RD 10 Gew.-% Emulsion (CAS-Nr. 9004-62-0, Hersteller Dow Corning S:A:, Belgien) als Entschäumer, wobei die Mengenangaben auf das Copolyamid bezogen sind.

Die Polyamidformmassen des Beispiels 28 und des Vergleichsbeispiels 29 der Tabelle 7 enthalten als Glasfasern Vetrotex 995 EC10-4.5 (Durchmesser 10 µm, Länge 4,5 mm, runder Querschnitt, Hersteller Saint-Gobain Vetrotex, Frankreich), als Hitzestabilisator 1 Irganox 1098 (N,N'-Hexan-1,6-diylbis[3-(3,5-di-tert-butyl-4-hydroxyphenyl)propionamid], CAS-Nr. 23128-74-7, Hersteller-BASF SE, Deutschland) und als Hitzestabilisator 2 Irgafos 168 (Tris(2,4-di-tert-butylphenyl)phosphit, CAS-Nr. 31570-04-4, Hersteller BASF SE, Deutschland).

### Herstellung der Prüfkörper

Die Prüfkörper wurden auf einer Spritzgussmaschine der Firma Arburg, Modell Allrounder 420 C 1000-250 hergestellt. Die Prüfkörper aus den unverstärkten Copolyamiden wurden mit aufsteigenden Zylindertemperaturen von 320 °C bis 340 °C gefertigt. Diejenigen aus den verstärkten Polyamidfommassen des Beispiel 28 und des Vergleichsbeispiels 29 wurden mit aufsteigenden Zylindertemperaturen von 340 °C bis 360 °C gefertigt.
Die Formtemperatur betrug immer 150 °C.

Die Prüfkörper wurden in trockenem Zustand verwendet; dazu wurden sie nach dem Spritzguss mindestens 48 h bei Raumtemperatur in trockener Umgebung, d.h. über Silicagel gelagert.

In Tabelle 1 sind die für die Herstellung der Copolyamide in den Beispielen und Vergleichsbeispielen verwendeten Monomere aufgeführt.

**Tabelle 1**

| **Monomer** | CAS**-Nr.** | **Schmelzbereich [°C]** | **Handelsname** | **Hersteller** |
|---|---|---|---|---|
| 1,6-Hexandiamin A1) | 124-09-4 | 39 bis 42 | - | BASF SE, Deutschland |
| 1,3-Bis(aminomethyl)-cyclohexan A2) | 2579-20-6 | < -70 | 1,3BAC | Mitsubishi Gas Chemical Company, Japan |
| Bis(4-amino-3-methylcyclohexyl)-methan A3a) | 6864-37-5 | - 7 bis - 0.6* | Laromin C260 | BASF SE, Deutschland |
| Bis(4-amino-cyclohexyl)-methan A3b) | 1761-71-3 | -16 bis 46 | 4,4'-Diaminodicyclohexylmethane | BASF SE, Deutschland |
| Terephthalsäure B1) | 100-21-0 | > 400 | - | CEPSA, Spanien |
| Isophthalsäure B2) | 121-91-5 | 345 bis 348 | - | Flint Hills Resources, Schweiz |
| 1,6-Hexandisäure B3) | 124-04-9 | 151 | - | BASF SE, Deutschland |
| Caprolactam Ca) | 105-60-2 | 68 bis 71 | - | BASF SE, Deutschland |
| 12-Aminododecansäure Cb) | 693-57-2 | 185 bis 187 | - | UBE Industries, |

| | | | | |
|---|---|---|---|---|
| * Gefrierbereich nach ASTM D1015-55 | | | | |

### Herstellung des Copolyamids PA 6T/1,3-BACT des Beispiels 1

In einem 20 l Autoklaven wurden 3,48 kg deionisiertes Wasser vorgelegt und 2,62 kg 1,6- Hexandiamin A1), 0,80 kg 1,3-Bis(aminomethyl)-cyclohexan A2), 4,55 kg Terephthalsäure B1) und 10,2 g Phosphinsäure (50 Gew.-%-ige wässerige Lösung) als Kondensationskatalysator und 3,2 g Antifoam RD 10 Gew.-% Emulsion als Entschäumer zugegeben. Danach wurde sechsmal mit Stickstoff inertisiert. Unter Rühren wurde auf die Reaktionstemperatur von 260 °C aufgeheizt. Dies erfolgte bei einem Druck von 32 bar. Der Ansatz wurde in der Druckphase für 1,5 Stunden auf der Reaktionstemperatur gehalten und anschliessend mit Dampf über eine Düse ausgetragen. Das Vorkondensat wurde 24 Stunden bei 110 °C und einem Vakuum von 30 mbar getrocknet.

Das Vorkondensat wurde in einem zweiwelligen Extruder der Firma Werner & Pfleiderer Typ ZSK 25 nachkondensiert. Dazu wurden in den ersten 4 Zonen Zylindertemperaturen von 10 bis 150 °C eingestellt, in den restlichen Zonen wurden Zylindertemperaturen von 300 bis 370 °C in einem aufsteigenden und wieder absteigenden Temperaturprofil verwendet. Die Schmelze wurde in der zweiten Zone vor der Düse durch einen Stickstoffstrom entgast. Die Schneckendrehzahl betrug 250 U/min, der Durchsatz 6 kg/h. Das Polyamid wurde als Strang durch eine Düse ausgetragen, wobei eine Düsentemperatur von 320 °C eingestellt war. Der Strang wurde in einem Wasserbad bei 80 °C abgekühlt und anschliessend granuliert. Das Granulat wurde 24 bei 120 °C und einem Vakuum von 30 mbar auf einen Wassergehalt von unter 0,1 Gew.-% getrocknet.

### Herstellung der Polyamidformmasse des Beispiels 28

Das getrocknete Granulat des Copolyamids I) wurde zusammen mit den beiden Hitzestabilisatoren zu einem Dryblend vermischt, und zwar im in der Tabelle 7 angegebenen Verhältnis. Diese Mischung (40 kg) wurde mittels eines Taumelmischers ca. 20 Minuten lang homogenisiert.

Die Polyamidformmasse wurde auf einem zweiwellen Extruder der Firma Werner & Pfleiderer Typ ZSK 25 hergestellt. Das Dryblend wurde dabei über eine Dosierwaage in den Einzug dosiert. Die Glasfaser wurde über einen Sidefeeder 6 Gehäuseeinheiten vor der Düse in die Schmelze gefördert.

Die Temperatur des ersten Gehäuses wurde auf 80 °C eingestellt, diejenige der restlichen Gehäuse auf 300 bis 350 °C. Es wurde eine Drehzahl von 250 U/min und ein Durchsatz von 10 kg/h verwendet und in der dritten Zone vor der Düse im Stickstoffstrom entgast. Die als Strang ausgetragene Polyamidformmasse wurde im Wasserbad bei 80 °C abgekühlt, granuliert und das erhaltene Granulat bei 120 °C für 24 h im Vakuum bei 30 mbar auf einen Wassergehalt von unter 0,1 Gew.-% getrocknet.

In den Tabellen 2 bis 4 werden dann die Zusammensetzungen der erfindungsgemäßen Beispiele 1 bis 15 aufgeführt. Gleichzeitig werden die für diese Bespiele ermittelten Messwerte angegeben.

**Tabelle 2**

| Beispiele 1 bis 10: Erfindungsgemässe Copolyamide aus 50 Mol-% Komponente A) und 50 Mol-% Komponente B) | | | | | | | | | | | |
|---|---|---|---|---|---|---|---|---|---|---|---|
| | | **Beispiele** | | | | | | | | | |
| **Komponente** | **Einheit** | **1** | **2** | **3** | **4** | **5** | **6** | **7** | **8** | **9** | **10** |
| A1) 1,6-Hexandiamin | Mol-Anteile | 80 | 65 | 70 | 70 | 65 | 78 | 64 | 70 | 82.5 | 85 |
| A2) 1,3-Bis(aminomethyl)-cyclohexan | Mol-Anteile | 20 | 35 | 26 | 15 | 10 | 11 | 18 | 4 | 17.5 | 15 |
| A3a) Bis(4-amino-3-methylcyclohexyl)-methan | Mol-Anteile | - | - | 4 | 15 | 25 | 11 | 18 | 26 | - | - |
| B1) Terephthalsäure | Mol-Anteile | 100 | 100 | 100 | 100 | 100 | 100 | 100 | 100 | 82.5 | 85 |
| B2) Isopthalsäure | Mol-Anteile | - | - | - | - | - | - | - | - | 17.5 | 15 |

| **Messwerte** | | | | | | | | | | | |
|---|---|---|---|---|---|---|---|---|---|---|---|
| relative Viskosität (RV)* | - | 1.72 | 1.65 | 1.70 | 1.70 | 1.63 | 1.63 | 1.77 | 1.64 | 1.62 | 1.63 |
| Glasübergangstemperatur** | °C | 153 | 161 | 159 | 160 | 159 | 151 | 167 | 161 | 152 | 150 |
| Schmelzpunkt** | °C | 337 | 322 | 323 | 332 | 331 | 343 | 319 | 335 | 325 | 335 |
| Schmelzwärme ΔH_{f}** | J/g | 57 | 45 | 51 | 47 | 38 | 60 | 43 | 48 | 47 | 54 |
| Kristallisationswärme ΔH_{c}** | J/g | 30 | 20 | 33 | 24 | 11 | 21 | 26 | 8 | 31 | 31 |
| (ΔH_{f} - ΔH_{c})** | J/g | 27 | 25 | 18 | 23 | 27 | 39 | 17 | 40 | 19 | 23 |
| Zug-E-Modul | MPa | 3500 | 3300 | 3040 | 2660 | 3350 | 3120 | 2650 | 2890 | 3600 | 3850 |
| Reissfestigkeit | MPa | 92 | 98 | 100 | 79 | 60 | 76 | 58 | 58 | 63 | 65 |
| Reissdehnung | % | 4.2 | 6.3 | 4.7 | 4.1 | 3.3 | 3.0 | 2.5 | 2.5 | 2.6 | 2.8 |
| Schlagzähigkeit Charpy 23 °C | kJ/m² | 75 | 102 | 133 | 115 | 62 | 72 | 85 | 55 | - | - |
| Kerbschlagzähigkeit Charpy 23 °C | kJ/m² | 7 | 9 | 7 | 10 | 7 | 8 | 11 | 6 | - | - |

| | | | | | | | | | | | |
|---|---|---|---|---|---|---|---|---|---|---|---|
| * RV relative Viskosität, gemessen an einer Lösung von 0.5 g Polyamid in 100 ml m-Kresol bei 20 °C ** Werte der 3. Aufheizung | | | | | | | | | | | |

Die erfindungsgemässen Copolyamide der Beispiele 1 bis 10 enthalten im Unterschied zum Copolyamid des Vergleichsbeispiels 16 alle 1,3-Bis(aminomethyl)-cyclohexan A2), zum Teil noch Bis(4-amino-3-methylcyclohexyl)-methan A3a) (als weiteres cycloaliphatisches Diamin) und zum Teil noch eine geringe Menge Isophthalsäure B2). Auf Grund dieser Zusammensetzungsänderungen weisen die erfindungsgemässen Copolyamide gegenüber dem Copolyamid des Vergleichsbeispiels 16 eine stark erhöhte Glasübergangstemperatur bei meist verbesserter Kristallisationsfähigkeit auf.

**Tabelle 3**

| Beispiele 11 bis 13: Erfindungsgemässe Copolyamide aus 50 Mol-% Komponente A) und 50 Mol-% Komponente B) | | | | |
|---|---|---|---|---|
| | | **Beispiele** | | |
| **Komponente** | **Einheit** | **11** | **12** | **13** |
| A1) 1,6-Hexandiamin | Mol-Anteile | 80 | 80 | 75 |
| A2) 1,3-Bis(aminomethyl)-cyclohexan | Mol-Anteile | 20 | 20 | 25 |
| B1) Terephthalsäure | Mol-Anteile | 90 | 95 | 95 |
| B3) 1,6-Hexandisäure | Mol-Anteile | 10 | 5 | 5 |

| **Messwerte** | | | | |
|---|---|---|---|---|
| relative Viskosität (RV)* | - | 1.61 | 1.62 | 1.61 |
| Glasübergangstemperatur** | °C | 144 | 147 | 149 |
| Schmelzpunkt** | °C | 322 | 334 | 325 |
| Schmelzwärme ΔH_{f}** | J/g | 47 | 60 | 60 |
| Kristallisationswärme ΔH_{c}** | J/g | 7 | 11 | 28 |
| (ΔH_{f} - ΔH_{c})** | J/g | 40 | 49 | 32 |
| Zug-E-Modul | MPa | 3350 | 3380 | 3290 |

| | | | | |
|---|---|---|---|---|
| * RV relative Viskosität, gemessen an einer Lösung von 0.5 g Polyamid in 100 ml m-Kresol bei 20 °C ** Werte der 3. Aufheizung | | | | |

Die erfindungsgemässen Copolyamide der Beispiele 11 bis 13 enthalten im Unterschied zum Copolyamid des Vergleichsbeispiels 16 1,3-Bis(aminomethyl)-cyclohexan A2), 1,6-Hexandisäure B3) (als aliphatische Disäure) und keine Isophthalsäure B2). Auf Grund dieser Zusammensetzungsänderungen weisen die erfindungsgemässen Copolyamide gegenüber dem Copolyamid des Vergleichsbeispiels 16 eine stark erhöhte Glasübergangstemperatur und eine stark verbesserte Kristallisationsfähigkeit auf.

**Tabelle 4**

| Beispiele 14 und 15: Erfindungsgemässe Coplyamide aus 48 Mol-% Komponente A), 48 Mol-% Komponente B) und 4 Mol-% Komponente C) | | | | | |
|---|---|---|---|---|---|
| | | **Beispiele** | | | |
| **Komponente** | **Einheit** | **14** | | **15** | |
| A1) 1,6-Hexandiamin | Mol-Anteile | 80 | Komponente A) 48 Mol-% | 80 | Komponente A) 48 Mol-% |
| A2) 1,3-Bis(aminomethyl)-cyclohexan | Mol-Anteile | 20 | | 20 | |
| B1) Terephthalsäure | Mol-Anteile | 100 | Komponente B) 48 Mol-% | 100 | Komponente B) 48 Mol-% |
| Ca) Caprolactam | Mol-Anteile | 100 | Komponente C) 4 Mol-% | - | - |
| Cb) 12-Aminododecansäure | Mol-Anteile | - | - | 100 | Komponente C) 4 Mol-% |

| **Messwerte** | | | | | |
|---|---|---|---|---|---|
| relative Viskosität (RV)* | - | 1.62 | | 1.59 | |
| Glasübergangstemperatur** | °C | 149 | | 141 | |
| Schmelzpunkt** | °C | 329 | | 325 | |
| Schmelzwärme ΔH_{f}** | J/g | 50 | | 50 | |
| Kristallisationswärme ΔH_{c}** | J/g | 32 | | 31 | |
| (ΔH_{f} - ΔH_{c})** | J/g | 18 | | 19 | |
| Zug-E-Modul | MPa | 3300 | | 3200 | |

| | | | | | |
|---|---|---|---|---|---|
| * RV relative Viskosität, gemessen an einer Lösung von 0.5 g Polyamid in 100 ml m-Kresol bei 20 °C ** Werte der 3. Aufheizung | | | | | |

Die erfindungsgemässen Copolyamide der Beispiele 14 und 15 enthalten im Unterschied zum Copolyamid des Vergleichsbeispiels 16 1,3-Bis(aminomethyl)-cyclohexan A2), Caprolactam Ca) bzw. 12-Aminododecansäure Cb) (als Komponente C)) und keine Isophthalsäure B2). Durch erfindungsgemässe Wahl der Zusammensetzung weisen die erfindungsgemässen Copolyamide gegenüber dem Copolyamid des Vergleichsbeispiels 16 eine stark erhöhte Glasübergangstemperatur bei leicht verbesserter Kristallisationsfähigkeit auf.

Alle erfindungsgemässen Copolyamide der Beispiele 1 bis 15 enthalten in der Summe maximal 38 Mol-Anteile der Komponenten A2) Bis(aminomethyl)-cyclohexan, A3) weiterem cycloaliphatischen Diamin, B2) Isophthalsäure und B3) aliphatischer Dicarbonsäure.

Die Tabellen 5 und 6 zeigen dann die Zusammensetzungen der Vergleichsbeispiele 16 bis 26 mit zugehörigen Messwerten.

**Tabelle 5**

| Vergleichsbeispiele 15 bis 23: | | | | | | | | | |
|---|---|---|---|---|---|---|---|---|---|
| Copolyamide aus 50 Mol-% Komponente A) und 50 Mol-% Komponente B) | | | | | | | | | |
| | | **Vergleichsbeispiele** | | | | | | | |
| **Komponente** | **Einheit** | **16** | **17** | **18** | **19** | **20** | **21** | **22** | **23** |
| A1) 1,6-Hexandiamin | Mol-Anteile | 100 | 100 | 60 | 80 | 58 | 75 | 73 | 76 |
| A2) 1,3-Bis(aminomethyl)-cyclohexan | Mol-Anteile | - | - | 40 | 20 | 12 | 20 | - | - |
| A3a) Bis(4-amino-3-methylcyclohexyl)-methan | Mol-Anteile | - | - | - | - | 30 | 30 | 27 | 24 |
| B1) Terephthalsäure | Mol-Anteile | 70 | 55 | 100 | 80 | 100 | 75 | 73 | 76 |
| B2) Isopthalsäure | Mol-Anteile | 30 | - | - | 20 | - | 25 | 27 | 24 |
| B3) 1,6-Hexandisäure | Mol-Anteile | - | 45 | - | - | - | - | - | - |

| **Messwerte** | | | | | | | | | |
|---|---|---|---|---|---|---|---|---|---|
| rel. Viskosität * | - | 1.58 | 1.72 | 1.70 | 1.60 | 1.66 | 1.58 | 1,79 | 1,76 |
| Glasübergangstemperatur** | °C | 130 | 94 | 166 | 148 | 170 | 151 | 154 | 142 |
| Schmelzpunkt** | °C | 325 | 302 | 301 | 318 | 317 | 310 | 314 | 324 |
| Schmelzwärme ΔH_{f}** | °C | 46 | 49 | 36 | 40 | 18 | 37 | 35 | 42 |
| Kristallisationswärme ΔH_{c}** | J/g | 29 | 18 | 33 | 36 | 13 | 31 | 33 | 34 |
| (ΔH_{f} - ΔH_{c})** | J/g | 17 | 31 | 3 | 4 | 5 | 6 | 2 | 8 |
| Zug-E-Modul | MPa | 3300 | 3100 | 2840 | - | - | - | 2580 | 2600 |
| Reissfestigkeit | MPa | 100 | 73 | 103 | - | - | - | 74 | 74 |
| Reissdehnung | % | 5.0 | 15 | 9.5 | - | - | - | 66 | 70 |
| Schlagzähigkeit Charpy 23 °C | kJ/m² | 80 | 80 | 116 | - | - | - | 124 | 128 |
| Kerbschlagzähigkeit Charpy 23 °C | kJ/m² | 6 | 7 | 10 | - | - | - | 15 | 15 |

| | | | | | | | | | |
|---|---|---|---|---|---|---|---|---|---|
| * RV relative Viskosität, gemessen an einer Lösung von 0.5 g Polyamid in 100 ml m-Kresol bei 20 °C ** Werte der 3. Aufheizung | | | | | | | | | |

Das Copolyamid des Vergleichsbeispiels 17 weist 45 Mol-Anteile von 1,6-Hexandisäure B3) auf und zeigt eine sehr tiefe Glasübergangstemperatur von nur 94 °C. Das Copolyamid des Vergleichsbeispiels 18 mit 40 Mol-Anteilen 1,3-Bis(aminomethyl)-cyclohexan A2) zeigt eine extrem tiefe Kristallisationsfähigkeit.

Extrem tiefe Kristallisationsfähigkeiten zeigen auch die Copolyamide der Vergleichsbeispiele 19 bis 23, bei denen die Summe der Mol-Anteile der Komponenten A2) Bis(aminomethyl)-cyclohexan, A3) weiterem cycloaliphatischen Diamin, B2) Isophthalsäure und B3) aliphatischer Dicarbonsäure bei 40 bis 54 Mol-Anteilen liegt.

**Tabelle 6**

| Vergleichsbeispiele 24 bis 26: | | | | |
|---|---|---|---|---|
| Copolyamide aus 50 Mol-% Komponente A) und 50 Mol-% Komponente B) | | | | |
| | | **Vergleichsbeispiele** | | |
| **Komponente** | **Einheit** | **24** | **25** | **26** |
| A1) 1,6-Hexandiamin | Mol-Anteile | 70 | 75 | 80 |
| A2) 1,3-Bis(aminomethyl)-cyclohexan | Mol-Anteile | 30 | 25 | 20 |
| B1) Terephthalsäure | Mol-Anteile | 80 | 80 | 80 |
| B3) 1,6-Hexansäure | Mol-Anteile | 20 | 20 | 20 |

| **Messwerte** | | | | |
|---|---|---|---|---|
| relative Viskosität (RV)* | - | 1.60 | 1.61 | 1.63 |
| Glasübergangstemperatur** | °C | 139 | 137 | 133 |
| Schmelzpunkt** | °C | 290 | 291 | 300 |
| Schmelzwärme ΔH_{f}** | J/g | 30 | 37 | 40 |
| Kristallisationswärme ΔH_{c}** | J/g | 29 | 28 | 29 |
| (ΔH_{f} - ΔH_{c})** | J/g | 1 | 9 | 11 |
| Zug-E-Modul | MPa | 3110 | 3160 | 3180 |

| | | | | |
|---|---|---|---|---|
| * RV relative Viskosität, gemessen an einer Lösung von 0.5 g Polyamid in 100 ml m-Kresol bei 20 °C ** Werte der 3. Aufheizung | | | | |

Die Copolyamide der Vergleichsbeispiele 24 bis 26 weisen gegenüber dem Copolyamid des Vergleichsbeispiels 16 meist nur leicht erhöhte Glasübergangstemperaturen auf und dies bei tiefen bis extrem tiefen Kristallisationsfähigkeiten. Die Summe der Mol-Anteile der Komponenten A2) 1,3-Bis(aminomethyl)-cyclohexan, B2) Isophthalsäure und B3) aliphatischer Dicarbonsäure liegt bei den Copolyamide der Vergleichsbeispiele 24 bis 26 bei 40 bis 50 Mol-Anteilen.

Tabelle 7 zeigt dann die Zusammensetzungen des Beispiel 27 und des Vergleichsbeispiels 28 mit zugehörigen Messwerten.

**Tabelle 7**

| Compounds mit Glasfasern | | | |
|---|---|---|---|
| | | **Beispiel** | **Vergleichsbeispiel** |
| **Komponente** | **Einheit** | **27** | **28** |
| PA 6T/1,3-BACT (70/30 Mol-%) Copolyamid von Beispiel 1 | Gew.-% | 59.7 | - |
| PA 6T/6I (70/30 Mol-%) Copolyamid von Vergleichsbeispiel 16 | Gew.-% | - | 59.7 |
| Glasfasern | Gew.-% | 40 | 40 |
| Hitzestabilisator 1 | Gew.-% | 0.15 | 0.15 |
| Hitzestabilisator 2 | Gew.-% | 0.15 | 0.15 |

| **Messwerte** | | | |
|---|---|---|---|
| relative Viskosität (RV)* | - | 1.62 | 1.63 |
| Zug-E-Modul bei 23 °C | MPa | 14080 | 14350 |
| Zug-E-Modul bei 100 °C | MPa | 11610 | 11920 |
| Zug-E-Modul bei 110 °C | MPa | 11580 | 11230 |
| Zug-E-Modul bei 120 °C | MPa | 11520 | 10520 |
| Zug-E-Modul bei 140 °C | MPa | 9460 | 6130 |

| | | | |
|---|---|---|---|
| * RV relative Viskosität, gemessen an einer Lösung von 0.5 g Polyamid in 100 ml m-Kresol bei 20 °C | | | |

Die verstärkte Polyamidformmasse des Beispiels 27 mit dem erfindungsgemässen Copolyamid des Beispiels 1 als Basis zeigt gegenüber der verstärkten Polyamidformmasse des Vergleichsbeispiels 28 mit dem Copolyamid des Vergleichsbeispiels 16 als Basis ab Temperaturen von 110 °C einen höheren Zug-E-Modul.

Tabelle 8 zeigt dann die Zusammensetzungen der Vergleichsbeispiele 29 bis 31 mit zugehörigen Messwerten.

**Tabelle 8**

| Vergleichsbeispiele 29 bis 31: Copolyamide aus 50 Mol-% Komponente A) und 50 Mol-% Komponente B) | | | | |
|---|---|---|---|---|
| | | **Vergleichsbeispiele** | | |
| **Komponente** | **Einheit** | **29** | **30** | **31** |
| A1) 1,6-Hexandiamin | Mol-Anteile | 77 | 83 | 79 |
| A3a) Bis(4-amino-3-methylcyclohexyl)-methan | Mol-Anteile | 23 | 17 | - |
| A3b) Bis(4-aminocyclohexyl)-methan | Mol-Anteile | - | - | 21 |
| B1) Terephthalsäure | Mol-Anteile | 100 | 83 | 79 |
| B2) Isopthalsäure | Mol-Anteile | - | 17 | 21 |

| **Messwerte** | | | | |
|---|---|---|---|---|
| rel. Viskosität * | - | 1.50 | 1.56 | 1.66 |
| Glasübergangstemperatur** | °C | 137 | 142 | 161 |
| Schmelzpunkt** | °C | 342 | 324 | 310 |
| Schmelzwärme ΔH_{f}** | °C | 54 | 34 | 26 |
| Kristallisationswärme ΔH_{c}** | J/g | 14 | 42 | 26 |
| (ΔH_{f} - ΔH_{c})** | J/g | 40 | 8 | 0 |
| Zug-E-Modul | MPa | - | 2600 | 2870 |
| Reissfestigkeit | MPa | - | 88 | 72 |
| Reissdehnung | % | - | 28 | 3.2 |
| Schlagzähigkeit Charpy 23 °C | kJ/m² | - | kB*** | 85 |
| Kerbschlagzähigkeit Charpy 23 °C | kJ/m² | - | 14 | 9 |

| | | | | |
|---|---|---|---|---|
| * RV relative Viskosität, gemessen an einer Lösung von 0.5 g Polyamid in 100 ml m-Kresol bei 20 °C ** Werte der 3. Aufheizung *** kB kein Bruch | | | | |

Die Copolyamide der Vergleichsbeispiele 29 und 31 weisen Zusammensetzungen auf wie sie in WO 2014/198762 beansprucht werden.

Das Copolyamid des Vergleichsbeispiels 29 zeigt mit der Zusammensetzung 38,5 Mol-% 1,6-Hexandiamin A1), 11,5 Mol-% Bis(4-amino-3-methylcyclohexyl)-methan A3a) und 50 Mol-% Terephthalsäure B1) eine gegenüber dem Vergleichsbeispiel 16 nur leicht erhöhte Glasübergangstemperatur und erreicht nicht die Glasübergangstemperaturen der erfindungsgemässen Beispiele 1 bis 15.

Das Copolyamid des Vergleichsbeispiels 30 zeigt mit der Zusammensetzung 41,5 Mol-% 1,6-Hexandiamin A1), 8,5 Mol-% Bis(4-amino-3-methylcyclohexyl)-methan A3a), 41,5 Mol-% Terephthalsäure B1) und 8,5 Mol-% Isophthalsäure B2) zwar eine deutlich erhöhte Glasübergangstemperatur, dies jedoch bei einer extrem tiefen Kristallisationsfähigkeit. Das Gleiche gilt für das Vergleichsbeispiel 31 mit der Zusammensetzung 39,5 Mol-% 1,6-Hexandiamin A1), 10,5 Mol-% Bis(4-amino-cyclohexyl)-methan A3b), 39,5 Mol-% Terephthalsäure B1) und 10,5 Mol-% Isophthalsäure B2).

## Patentansprüche

1. Copolyamide gebildet aus
einer Diaminkomponente A),
einer Dicarbonsäurekomponente B) und
gegebenenfalls einer Lactam- und/oder ω-Aminosäurekomponente C), wobei ein maximaler Überschuss der Diaminkomponente A) oder der Dicarbonsäurekomponente B) von 3 % eingesetzt wird, die Menge der Lactam- und/oder ω-Aminosäurekomponente C) 0 bis 15 Mol-% und die Summe der Komponenten A) bis C) 100 Mol-% beträgt und wobei
a) die Diaminkomponente A) aus
A1) 62 bis 96 Mol-Anteilen 1,6-Hexandiamin,
A2) 4 bis 38 Mol-Anteilen Bis(aminomethyl)-cyclohexan sowie
A3) 0 bis 30 Mol-Anteilen eines oder mehrerer von A2) verschiedener cycloaliphatischer Diamine besteht,
wobei die Summe von A2) und A3) 4 bis 38 Mol-Anteile und die Summe von A1), A2) und A3) 100 Mol-Anteile beträgt,
b) die Dicarbonsäurekomponente B) aus
B1) 64 bis 100 Mol-Anteilen Terephthalsäure,
B2) 0 bis 18 Mol-Anteilen Isophthalsäure sowie
B3) 0 bis 18 Mol-Anteilen einer oder mehrerer aliphatischer Dicarbonsäuren mit 6 bis 18 C-Atomen besteht,
wobei die Summe von B1), B2) und B3) 100 Mol-Anteile beträgt, und
c) die Lactam- und/oder ω-Aminosäurekomponente C) aus
einem oder mehreren Lactamen und/oder ω-Aminosäuren besteht, wobei die Summe der Lactame und/oder ω-Aminosäuren 100 Mol-Anteile beträgt.

2. Copolyamide nach Anspruch 1,
**dadurch gekennzeichnet, dass** die Diaminkomponete A) aus
A1) 65 bis 90 Mol-Anteilen 1,6-Hexandiamin,
A2) 10 bis 25 Mol-Anteilen Bis(aminomethyl)-cyclohexan sowie
A3) 0 bis 25 Mol-Anteilen eines oder mehrerer von A2) verschiedener cycloaliphatischer Diamine
ausgewählt ist, wobei die Summe von A2) und A3) 10 bis 35 Mol-Anteile und die Summe von A1), A2) und A3) 100 Mol-Anteile beträgt.

3. Copolyamide nach einem der vorhergehenden Ansprüche,
**dadurch gekennzeichnet, dass** die Diaminkomponete A) aus
A1) 70 bis 82 Mol-Anteilen 1,6-Hexandiamin,
A2) 18 bis 30 Mol-Anteilen Bis(aminomethyl)-cyclohexan sowie
A3) 0 bis 12 Mol-Anteilen eines oder mehrerer von A2) verschiedener cycloaliphatischer Diamine
ausgewählt ist, wobei die Summe von A2) und A3) 18 bis 30 Mol-Anteile und die Summe von A1), A2) und A3) 100 Mol-Anteile beträgt.

4. Copolyamide nach einem der vorhergehenden Ansprüche,
**dadurch gekennzeichnet, dass** die Dicarbonsäurekomponente B) aus
B1) 70 bis 100 Mol-Anteilen Terephthalsäure,
B2) 0 bis 15 Mol-Anteilen Isophthalsäure sowie
B3) 0 bis 15 Mol-Anteilen einer oder mehrerer aliphatischer Dicarbonsäuren mit 6 bis 18 C-Atomen
ausgewählt ist und die Summe von B1), B2) und B3) 100 Mol-Anteile beträgt.

5. Copolyamide nach einem der vorhergehenden Ansprüche,
**dadurch gekennzeichnet, dass** die Dicarbonsäurekomponente B) aus
B1) 80 bis 100 Mol-Anteilen Terephthalsäure,
B2) 0 bis 10 Mol-Anteilen Isophthalsäure sowie
B3) 0 bis 10 Mol-Anteilen einer oder mehrerer aliphatischer Dicarbonsäuren mit 6 bis 18 C-Atomen
ausgewählt ist und die Summe von B1), B2) und B3) 100 Mol-Anteile beträgt.

6. Copolyamide nach einem der vorhergehenden Ansprüche,
**dadurch gekennzeichnet, dass** die Menge der Komponente C) 0 bis 10 Mol-%, bevorzugt 0 bis 5 Mol-% beträgt.

7. Copolyamide nach Anspruch 1,
**dadurch gekennzeichnet, dass** die Summe der Mol-Anteile von A2) Bis(aminomethyl)-cyclohexan, A3) cycloaliphatischem Diamin, B2) Isophthalsäure und B3) aliphatischer Dicarbonsäure maximal 38 Mol-Anteile, bevorzugt maximal 35 Mol-Anteile, besonders bevorzugt maximal 30 Mol-Anteile beträgt.

8. Copolyamide nach einem der vorhergehenden Ansprüche,
**dadurch gekennzeichnet, dass** die Copolyamide eine Glasübergangstemperatur von mindestens 140°C, bevorzugt von mindestens 145 °C, besonders bevorzugt von mindestens 150°C aufweisen,

9. Copolyamide nach einem der vorhergehenden Ansprüche,
**dadurch gekennzeichnet, dass** die Copolyamide eine Schmelztemperatur von höchstens 350°C, bevorzugt von höchstens 345°C, besonders bevorzugt von 300 bis 340 °C aufweisen.

10. Copolyamide nach einem der vorhergehenden Ansprüche,
**dadurch gekennzeichnet, dass** die Copolyamide eine als Differenz aus Schmelzwärme und Kristallisationswärme bestimmte Kristallisationsfähigkeit von mindestens 15 J/g, bevorzugt mindestens von 20 J/g und besonders bevorzugt von mindestens 25 J/g aufweisen.

11. Copolyamide nach einem der vorhergehenden Ansprüche,
**dadurch gekennzeichnet, dass** die Copolyamide eine relative Viskosität, gemessen bei 20°C und einer Konzentration von 0,5 g/dl in m-Kresol, von 1,45 bis 1,95, bevorzugt 1,50 bis 1,75, besonders bevorzugt 1,55 bis 1,68 aufweisen.

12. Copolyamide nach einem der vorhergehenden Ansprüche,
**dadurch gekennzeichnet, dass** die Copolyamide ein Elastizitätsmodul zwischen 2400 und 4200 MPa, bevorzugt 2500 bis 4000 MPa, besonders bevorzugt 2600 bis 3900 MPa aufweisen.

13. Polyamidformmasse enthaltend eines oder mehrere Copolyamide nach einem der vorhergehenden Ansprüche.

14. Polyamidformmasse nach Anspruch 13 bestehend aus
I) 15 bis 99,95 Gew.-% einem oder mehreren Copolyamiden nach einem der Ansprüche 1 bis 13,
II) 0,05 bis 25 Gew.-% Zusatzstoffen,
III) 0 bis 70 Gew.-% Verstärkungs- und/oder Füllstoffen,
IV) 0 bis 45 Gew.-% weiteren Polymeren, verschieden von der Komponente I),
wobei sich die Komponenten I) bis IV) zu 100 Gew.-% addieren.

15. Formkörper hergestellt aus einer Polyamidformmasse nach einem der Ansprüche 13 oder 14, bevorzugt in Form eines Bauteils zum Beispiel im Automobil, insbesondere im Motorraum, im Sanitärbereich, insbesondere für Heisswasseranwendungen, im Haushaltsbereich, insbesondere für Kaffeemaschinen, Wasserkocher, Tauchsieder, Geschirrspülmaschinen, Waschmaschinen, in der Mess-, Regelungs- und Steuertechnik, insbesondere für Aktuatoren, Sensoren, Getriebe, Druckluftsteuerungen, Ventile, sowohl für Hydraulik als auch Pneumatik oder im Maschinenbau.

## Claims

1. Copolyamides formed from
a diamine component A),
a dicarboxylic acid component B) and
possibly a lactam- and/or ω-amino acid component C),
a maximum excess of the diamine component A) or the dicarboxylic acid component B) of 3 % being used, the quantity of the lactam- and/or ω-amino acid component C) being 0 - 15% by mol and the sum of components A) to C) being 100% by mol, and
a) the diamine component A) consisting of
A1) 62 to 96 proportions by mol of 1,6-hexanediamine,
A10 4 to 38 proportions by mol of bis(aminomethyl)cyclohexane and also
A3) 0 to 30 proportions by mol of one or more cycloaliphatic diamines different from A2),
the sum of A2) and A3) being 4 to 38 proportions by mol and the sum of A1), A2) and A3) being 100 proportions by mol,
b) the dicarboxylic acid component B) consisting of
B1) 64 to 100 proportions by mol of terephthalic acid,
B2) 0 to 18 proportions by mol of isophthalic acid and also
B3) 0 to 18 proportions by mol of one or more aliphatic dicarboxylic acids with 6 to 18 C-atoms,
the sum of B1), B2) and B3) being 100 proportions by mol, and
c) the lactam- and/or ω-amino acid component C) consisting of one or more lactams and/or ω-amino acids, the sum of the lactams and/or ω-amino acids being 100 proportions by mol.

2. Copolyamides according to claim 1,
**characterised in that** the diamine component A) is selected from
A1) 65 to 90 proportions by mol of 1,6-hexanediamine,
A2) 10 to 25 proportions by mol of bis(aminomethyl)cyclohexane and also
A3) 0 to 25 proportions by mol of one or more cycloaliphatic diamines different from A2),
the sum of A2) and A3) being 10 to 35 proportions by mol and the sum of A1), A2) and A3) being 100 proportions by mol.

3. Copolyamides according to one of the preceding claims, **characterised in that** the diamine component A) is selected from
A1) 70 to 82 proportions by mol of 1,6-hexanediamine,
A2) 18 to 30 proportions by mol of bis(aminomethyl)cyclohexane and also
A3) 0 to 12 proportions by mol of one or more cycloaliphatic diamines different from A2),
the sum of A2) and A3) being 18 to 30 proportions by mol and the sum of A1), A2) and A3) being 100 proportions by mol.

4. Copolyamides according to one of the preceding claims, **characterised in that** the dicarboxylic acid component B) is selected from
B1) 70 to 100 proportions by mol of terephthalic acid,
B2) 0 to 15 proportions by mol of isophthalic acid and also
B3) 0 to 15 proportions by mol of one or more aliphatic dicarboxylic acids with 6 to 18 C-atoms
and the sum of B1), B2) and B3) being 100 proportions by mol.

5. Copolyamides according to one of the preceding claims, **characterised in that** the dicarboxylic acid component B) is selected from
B1) 80 to 100 proportions by mol of terephthalic acid,
B2) 0 to 10 proportions by mol of isophthalic acid and also
B3) 0 to 10 proportions by mol of one or more aliphatic dicarboxylic acids with 6 to 18 C-atoms
and the sum of B1), B2) and B3) being 100 proportions by mol.

6. Copolyamides according to one of the preceding claims,
**characterised in that** the quantity of component C) is 0 to 10% by mol, preferably 0 to 5% by mol.

7. Copolyamides according to claim 1,
**characterised in that** the sum of the proportions by mol of A2) bis(aminomethyl)cyclohexane, A3) cycloaliphatic diamine, B2) isophthalic acid and B3) aliphatic dicarboxylic acid is at most 38 proportions by mol, preferably at most 35 proportions by mol, particularly preferably at most 30 proportions by mol.

8. Copolyamides according to one of the preceding claims,
**characterised in that** the copolyamides have a glass transition temperature of at least 140°C, preferably of at least 145°C, particularly preferably of at least 150°C.

9. Copolyamides according to one of the preceding claims,
**characterised in that** the copolyamides have a melting temperature of at most 350°C, preferably of at most 345°C, particularly preferably of 300 to 340°C.

10. Copolyamides according to one of the preceding claims,
**characterised in that** the copolyamides have a crystallisation capacity, determined as difference of melting heat and crystallisation heat, of at least 15 J/g, preferably at least of 20 J/g and particularly preferably of at least 25 J/g.

11. Copolyamides according to one of the preceding claims,
**characterised in that** the copolyamides have a relative viscosity, measured at 20°C and a concentration of 0.5 g/dl in m-cresol, of 1.45 to 1.95, preferably of 1.50 to 1.75, particularly preferably 1.55 to 1.68.

12. Copolyamides according to one of the preceding claims,
**characterised in that** the copolyamides have a tensile modulus of elasticity between 2,400 and 4,200 MPa, preferably 2,500 to 4,000 MPa, particularly preferably 2,600 to 3,900 MPa.

13. Polyamide moulding compound comprising one or more copolyamides according to one of the preceding claims.

14. Polyamide moulding compound according to claim 13, consisting of
I) 15 to 99.95% by weight of one or more copolyamides according to one of the claims 1 to 13,
III) 0.05 to 25% by weight of additives,
III) 0 to 70% by weight of reinforcing- and/or filling materials,
IV) 0 to 45% by weight of further polymers, different from component I),
components I) to IV) adding up to 100% by weight.

15. Moulded article produced from a polyamide moulding compound according to one of the claims 13 or 14, preferably in the form of a component for example in automobiles, in particular in the engine space, in the sanitary field, in particular for hot water applications, in the domestic field, in particular for coffee machines, water boilers, immersion coils, dishwashers, washing machines, in measuring-, regulating- and control technology, in particular for actuators, sensors, transmissions, compressed air controls, valves, both for hydraulics and pneumatics, or in mechanical engineering.

## Revendications

1. Copolyamides formés
d'un composant diamine A),
d'un composant acide dicarboxylique B) et
éventuellement d'un composant lactame et/ou acide ω-aminé C),
pour lesquels on utilise un excès maximal du composant diamine A) ou du composant acide dicarboxylique B) de 3 %, la quantité du composant lactame et/ou acide ω-aminé C) étant de 0 à 15 % en moles, et la somme des composants A) à C) étant de 100 % en moles, et
a) le composant diamine étant constitué
A1) de 62 à 96 parties en moles de 1,6-hexanediamine,
A2) de 4 à 38 parties en moles de bis(aminométhyl)-cyclohexane, ainsi que
A3) de 0 à 30 parties en moles d'une ou plusieurs diamines cycloaliphatiques différentes de A2),
la somme de A2) et de A3) étant de 4 à 38 parties en moles et la somme de A1), de A2) et de A3) étant de 100 parties en moles,
b) le composant acide dicarboxylique B) étant constitué
B1) de 64 à 100 parties en moles d'acide téréphtalique,
B2) de 0 à 18 parties en moles d'acide isophtalique, ainsi que
B3) de 0 à 18 parties en moles d'un ou plusieurs acides dicarboxyliques aliphatiques ayant 6 à 18 atomes de carbone,
la somme de B1), de B2) et de B3) étant de 100 parties en moles, et
c) le composant lactame et/ou acide ω-aminé C) étant constitué d'un ou plusieurs lactames et/ou acides ω-aminés, la somme des lactames et/ou des acides ω-aminés étant de 100 parties en moles.

2. Copolyamides selon la revendication 1, **caractérisés en ce que** le composant diamine A) est choisi parmi
A1) 65 à 90 parties en moles de 1,6-hexanediamine,
A2) 10 à 25 parties en moles de bis(aminométhyl)-cyclohexane, ainsi que
A3) 0 à 25 parties en moles d'une ou plusieurs diamines cycloaliphatiques différentes de A2),
la somme de A2) et de A3) étant de 10 à 35 parties en moles et la somme de A1), de A2) et de A3) étant de 100 parties en moles.

3. Copolyamides selon l'une des revendications précédentes, **caractérisés en ce que** le composant diamine A) est choisi parmi
A1) 70 à 82 parties en moles de 1,6-hexanediamine,
A2) 18 à 30 parties en moles de bis(aminométhyl)-cyclohexane, ainsi que
A3) 0 à 12 parties en moles d'une ou plusieurs diamines cycloaliphatiques différentes de A2),
la somme de A2) et de A3) étant de 18 à 30 parties en moles et la somme de A1), de A2) et de A3) étant de 100 parties en moles.

4. Copolyamides selon l'une des revendications précédentes, **caractérisés en ce que** le composant acide dicarboxylique B) est choisi parmi
B1) 70 à 100 parties en moles d'acide téréphtalique,
B2) 0 à 15 parties en moles d'acide isophtalique, ainsi que
B3) 0 à 15 parties en moles d'un ou plusieurs acides dicarboxyliques aliphatiques ayant 6 à 18 atomes de carbone,
et la somme de B1), de B2) et de B3) étant de 100 parties en moles.

5. Copolyamides selon l'une des revendications précédentes, **caractérisés en ce que** le composant acide dicarboxylique B) est choisi parmi
B1) 80 à 100 parties en moles d'acide téréphtalique,
B2) 0 à 10 parties en moles d'acide isophtalique, ainsi que
B3) 0 à 10 parties en moles d'un ou plusieurs acides dicarboxyliques aliphatiques ayant 6 à 18 atomes de carbone,
et la somme de B1), de B2) et de B3) étant de 100 parties en moles.

6. Copolyamides selon l'une des revendications précédentes, **caractérisés en ce que** la quantité du composant C) est de 0 à 10 % en moles, de préférence de 0 à 5 % en moles.

7. Copolyamides selon la revendication 1, **caractérisés en ce que** la somme des parties en moles de A2) le bis(aminométhyl)-cyclohexane, de A3) la diamine cycloaliphatique, de B2) l'acide isophtalique et de B3) l'acide dicarboxylique aliphatique, est au maximum de 38 parties en moles, de préférence au maximum de 35 parties en moles, d'une manière particulièrement préférée au maximum de 30 parties en moles.

8. Copolyamides selon l'une des revendications précédentes, **caractérisés en ce que** les copolyamides présentent une température de transition vitreuse d'au moins 140 °C, de préférence d'au moins 145 °C, d'une manière particulièrement préférée d'au moins 150 °C.

9. Copolyamides selon l'une des revendications précédentes, **caractérisés en ce que** les copolyamides présentent une température de fusion d'au plus 350 °C, de préférence d'au plus 345 °C, d'une manière particulièrement préférée de 300 à 340 °C.

10. Copolyamides selon l'une des revendications précédentes, **caractérisés en ce que** les copolyamides présentent une aptitude à la cristallisation, déterminée par la différence entre la chaleur de fusion et la chaleur de cristallisation, d'au moins 15 J/g, de préférence d'au moins 20 J/g et d'une manière particulièrement préférée d'au moins 25 J/g.

11. Copolyamides selon l'une des revendications précédentes, **caractérisés en ce que** les copolyamides présentent une viscosité relative, mesurée à 20 °C pour une concentration de 0,5 g/dl dans le m-crésol, de 1,45 à 1,95, de préférence de 1,50 à 1,75, d'une manière particulièrement préférée de 1,55 à 1,68.

12. Copolyamides selon l'une des revendications précédentes, **caractérisés en ce que** les copolyamides présentent un module d'élasticité compris entre 2400 et 4200 MPa, de préférence entre 2500 et 4000 MPa, d'une manière particulièrement préférée entre 2600 et 3900 MPa.

13. Mélange à mouler de polyamides contenant un ou plusieurs copolyamides selon l'une des revendications précédentes.

14. Mélange à mouler de polyamides selon la revendication 13, constitué
I) de 15 à 99,95 % en poids d'un ou plusieurs copolyamides selon l'une des revendications 1 à 13,
II) de 0,05 à 25 % en poids d'additifs,
III) de 0 à 70 % en poids d'agents de renforcement et/ou de charges,
IV) de 0 à 45 % en poids de polymères supplémentaires, différents du composant I), le total des composants I) à IV) étant de 100 % en poids.

15. Objet moulé fabriqué à partir d'un mélange à mouler de polyamides selon l'une des revendications 13 ou 14, de préférence sous forme d'une pièce par exemple dans une automobile, en particulier dans le compartiment moteur, dans le domaine sanitaire, en particulier pour les applications utilisant de l'eau chaude, dans le domaine ménager, en particulier pour les machines à café, les bouilloires, les thermoplongeurs, les lave-vaisselles, les machines à laver, en métrologie, techniques de régulation et de commande, en particulier pour des actionneurs, des capteurs, des engrenages, des commandes à air comprimé, des vannes, tant en hydraulique qu'en pneumatique, ou en construction mécanique.
